# EUROPEAN PATENT APPLICATION

(11) **EP 4 503 252 A1**
(43) Date of publication of application: **05.02.2025**
(21) Application number: 22934182.1
(22) Date of filing: 31.03.2022
(51) Int. Cl.: H01M 10/44, H01M 10/0525

(54) **ELECTROCHEMICAL APPARATUS AND CONTROL METHOD THEREFOR, ELECTRONIC DEVICE, AND STORAGE MEDIUM**

(71) Applicant: Ningde Amperex Technology Limited, Ningde, Fujian 352100 (CN)
(72) Inventor: ZOU, Bangkun, Ningde, Fujian 352100 (CN); QU, Changming, Ningde, Fujian 352100 (CN)
(74) Representative: Klunker IP Patentanwälte PartG mbB
(86) International application number: PCT/CN2022/084405
(87) International publication number: WO 2023/184336

(57) **Abstract**

Some embodiments of this application provide an electrochemical apparatus and a control method thereof, an electronic device, and a storage medium. A negative electrode active material of the electrochemical apparatus includes a first active material and a second active material; where a gram capacity of the first active material is less than that of the second active material; a discharge operating voltage range of the first active material includes a first voltage range that is not greater than an upper limit of a discharge operating voltage of the second active material; the electrochemical apparatus operates at a first discharge cut-off voltage and a first charge cut-off voltage during a first time period; the electrochemical apparatus operates at a second discharge cut-off voltage and a second charge cut-off voltage during a second time period; and the first discharge cut-off voltage and the second discharge cut-off voltage are both within the first voltage range; where the first discharge cut-off voltage is less than the second discharge cut-off voltage, and/or the first charge cut-off voltage is greater than the second charge cut-off voltage. This solution can improve the volumetric energy density of the electrochemical apparatus while ensuring that the electrochemical apparatus has a long service life.

## Description

### TECHNICAL FIELD

Some embodiments of this application relate to the field of electrochemical technologies, and in particular, to an electrochemical apparatus and a control method thereof, an electronic device, and a storage medium.

### BACKGROUND

With the popularization of electronic products such as notebook computers, mobile phones, tablet computers, portable power sources, and drones, requirements for electrochemical apparatuses thereof become increasingly high. Electrochemical apparatuses are not only required to be light, but also required to have high volumetric energy density and long service life. Lithium-ion batteries, sodium-ion batteries, and other secondary batteries are commonly used electrochemical apparatus in electronic products. Silicon materials have high reversible capacity. Thus silicon is considered a potential negative electrode material for secondary batteries to further increase the volumetric energy density of secondary batteries. However, silicon negative electrode materials undergo significant volume swelling during cycling, which affects the service life of secondary batteries.

### SUMMARY

In view of this, some embodiments of this application provide an electrochemical apparatus and a control method thereof, an electronic device, and a storage medium, which can improve the volumetric energy density of the electrochemical apparatus while ensuring that the electrochemical apparatus has a long service life.

According to a first aspect of some embodiments of this application, an electrochemical apparatus is provided. A negative electrode active material of the electrochemical apparatus includes a first active material and a second active material; where a gram capacity of the first active material is less than that of the second active material; a discharge operating voltage range of the first active material includes a first voltage range that is not greater than an upper limit of a discharge operating voltage of the second active material; the electrochemical apparatus operates at a first discharge cut-off voltage and a first charge cut-off voltage during a first time period; the electrochemical apparatus operates at a second discharge cut-off voltage and a second charge cut-off voltage during a second time period; and the first discharge cut-off voltage and the second discharge cut-off voltage are both within the first voltage range; where the first discharge cut-off voltage is less than the second discharge cut-off voltage, and/or the first charge cut-off voltage is greater than the second charge cut-off voltage.

The electrochemical apparatus operates at the first discharge cut-off voltage and the first charge cut-off voltage during the first time period. The electrochemical apparatus operates at the second discharge cut-off voltage and the second charge cut-off voltage during the second time period. The first discharge cut-off voltage and the second discharge cut-off voltage are both within the first voltage range. When the discharge cut-off voltage is within the first voltage range, much more of the first active material and much more of the second active material of the negative electrode active material participate in the discharge. Adjusting the discharge cut-off voltage and the charge cut-off voltage of the electrochemical apparatus in a way that the first discharge cut-off voltage is less than the second discharge cut-off voltage, and/or the first charge cut-off voltage is greater than the second charge cut-off voltage. Adjusting the capacity offered by the second active material allows the capacity offered by the second active material to correspond to the state of health of the electrochemical apparatus, so that the service life of the electrochemical apparatus is extended. Thus, the electrochemical apparatus can have a longer service life while having improved volumetric energy density of the electrochemical apparatus.

In a possible embodiment, the discharge operating voltage range of the first active material further includes a second voltage range greater than the upper limit of the discharge operating voltage of the second active material; and the electrochemical apparatus operates at a third discharge cut-off voltage and a third charge cut-off voltage during a third time period; where the third discharge cut-off voltage is within the second voltage range, and/or the second charge cut-off voltage is greater than the third charge cut-off voltage.

Within the second voltage range, when the discharge cut-off voltage is within the second voltage range, much more of the first active material of the negative electrode active material participates in discharge, and none or only a small amount of the second active material participates in discharge. With the discharge cut-off voltage and the charge cut-off voltage of the electrochemical apparatus adjusted, the third discharge cut-off voltage is within the second voltage range, and/or the second charge cut-off voltage is greater than the third charge cut-off voltage. This can prevent the second active material from participating in the discharge process of the electrochemical apparatus, or allow only a small amount of the second active material to participate in the discharge process of the electrochemical apparatus. Thus, after significant swelling of the second active material, the second active material does not participate in the discharge process of the electrochemical apparatus, thereby suppressing further swelling of the electrochemical apparatus and extending the service life of the electrochemical apparatus.

In a possible embodiment, the electrochemical apparatus performs at least one of the following operations during a fourth time period: (i) stopping charge and discharge; or (ii) issuing information for indicating stopping performing charge and discharge operations on the electrochemical apparatus.

As the number of cycles of the electrochemical apparatus increases, the endurance and safety performance of the electrochemical apparatus decrease, affecting the user experience. Since the second active material swells during cycling, as the number of cycles of the electrochemical apparatus increases, the volume of the electrochemical apparatus undergoes significant swelling. Expansion of the electrochemical apparatus increases the risk of damage to electronic devices. When the endurance and safety performance of the electrochemical apparatus decline to a certain extent, or the volume of the electrochemical apparatus swells to a certain extent, the electrochemical apparatus stops charge and discharge, or issues information to indicate stopping charge and discharge operations performed on the electrochemical apparatus, so as to prompt the user to replace the electrochemical apparatus. This can improve the user experience and enhance the safety of the electrochemical apparatus during use.

In a possible embodiment, the first time period, the second time period, the third time period and the fourth time period are sequentially arranged in chronological order in a life cycle of the electrochemical apparatus.

The first time period, the second time period, the third time period, and the fourth time period are sequentially arranged in chronological order in the life cycle of the electrochemical apparatus. The discharge cut-off voltages of the electrochemical apparatus are gradually increased in chronological order of the time periods, and the charge cut-off voltages of the electrochemical apparatus are gradually decreased in chronological order of the time periods. In the early stage of cycling of the electrochemical apparatus, the high gram capacity advantage of the second active material is fully utilized to improve the volumetric energy density of the electrochemical apparatus. In the later stage of cycling of the electrochemical apparatus, the capacity offered by the second active material is reduced, the swelling speed of the electrochemical apparatus is lowered, and the service life of the electrochemical apparatus is extended. Finally, charge and discharge operations performed on the electrochemical apparatus are stopped, or stopping charge and discharge operations performed on the electrochemical apparatus is indicated to improve the user experience with the electrochemical apparatus and ensure the safety of the electronic device containing the electrochemical apparatus.

In a possible embodiment, the second active material includes silicon, the first voltage range is not greater than 3.5 V, and the second voltage range is greater than 3.5 V.

When the second active material includes silicon, during the discharge process of the electrochemical apparatus, when the discharge voltage is above 3.5 V, the discharge process of the electrochemical apparatus is mainly participated by the first active material, with none or only a small amount of the second active material participating in the discharge process of the electrochemical apparatus. When the discharge voltage is below 3.5 V, both the first active material and the second active material participate in the discharge process of the electrochemical apparatus in large amounts. 3.5 V is used as a dividing point of the first voltage range and the second voltage range. In the first time period, the high gram capacity performance of the second active material can be fully utilized to improve the volumetric energy density of the electrochemical apparatus. In the second time period, the swelling speed of the electrochemical apparatus can be slowed down, extending the service life of the electrochemical apparatus.

In a possible embodiment, when the electrochemical apparatus operates in different time periods, a state of health (State Of Health, SOH) parameter of the electrochemical apparatus is within different value ranges.

When the electrochemical apparatus operates in different time periods, the SOH parameter of the electrochemical apparatus falls within different value ranges. The first time period, the second time period, the third time period, and the fourth time period can be determined based on the SOH parameter of the electrochemical apparatus. Since the SOH parameter is used to indicate the state of health of the electrochemical apparatus, the time periods in which the electrochemical apparatus is to operate are determined based on the SOH parameter, which means that the time periods in which the electrochemical apparatus is to operate are determined based on the state of health of the electrochemical apparatus. This allows the electrochemical apparatus to operate at different discharge cut-off voltages and/or charge cut-off voltages in different time periods. This ensures that the electrochemical apparatus has a long service life while fully utilizing the high gram capacity performance of the second active material to improve the volumetric capacity density of the electrochemical apparatus.

In a possible embodiment, the SOH parameter includes at least one of the following: (i) internal resistance of the electrochemical apparatus; (ii) reversible capacity of the electrochemical apparatus; (iii) thickness of the electrochemical apparatus; or (iiii) pressure or intensity of pressure between the electrochemical apparatus and a housing accommodating the electrochemical apparatus.

During cycling of the electrochemical apparatus, the internal resistance, reversible capacity, thickness, and the pressure or intensity of pressure to the housing of the electrochemical apparatus can all reflect the state of health of the electrochemical apparatus. With one or more of the internal resistance, reversible capacity, thickness, and the pressure or intensity of pressure to the housing of the electrochemical apparatus used as the SOH parameter, the SOH parameter can accurately reflect the state of health of the electrochemical apparatus, and then the different time periods can be determined based on the SOH parameter. Adjusting the discharge cut-off voltage and charge cut-off voltage of the electrochemical apparatus in different time periods can fully utilize the high gram capacity performance of the second active material, and extends the service life of the electrochemical apparatus while improving the volumetric energy density of the electrochemical apparatus.

In a possible embodiment, the SOH parameter is the intensity of pressure between the electrochemical apparatus and the housing. When the intensity of pressure between the electrochemical apparatus and the housing is less than a first threshold, the electrochemical apparatus operates in the first time period; when the intensity of pressure between the electrochemical apparatus and the housing is greater than or equal to the first threshold and less than a second threshold, the electrochemical apparatus operates in the second time period; when the intensity of pressure between the electrochemical apparatus and the housing is greater than or equal to the second threshold and less than a third threshold, the electrochemical apparatus operates in the third time period; and when the intensity of pressure between the electrochemical apparatus and the housing is greater than or equal to the third threshold, the electrochemical apparatus operates in the fourth time period.

The intensity of pressure between the electrochemical apparatus and the housing continues to increase. Therefore, the life cycle of the electrochemical apparatus can be divided into four time periods by sequentially increasing the first threshold, second threshold, and third threshold. In the first three time periods, the electrochemical apparatus operates at different discharge cut-off voltages and/or charge cut-off voltages. This reduces the swelling speed of the electrochemical apparatus and extends the service life of the electrochemical apparatus while improving the volumetric capacity density of the electrochemical apparatus. In the final time period, charge and discharge operations performed on the electrochemical apparatus are stopped, or stopping charge and discharge operations performed on the electrochemical apparatus is indicated, thereby improving the user experience with the electrochemical apparatus.

In a possible embodiment, the first threshold is greater than or equal to 0.03 MPa, the second threshold is less than 0.5 MPa, the third threshold is greater than or equal to 0.5 MPa, and the second threshold is greater than the first threshold.

With the first threshold set to be greater than or equal to 0.03 MPa, the second threshold to be less than 0.5 MPa, and the third threshold to be greater than or equal to 0.5 MPa, the life cycle of the electrochemical apparatus is divided into four time periods by the first threshold, second threshold, and third threshold. In the first three time periods, the electrochemical apparatus operates at different discharge cut-off voltages and/or charge cut-off voltages. This slows down deterioration of the cycling state of the electrochemical apparatus and extends the service life of the electrochemical apparatus while fully utilizing the energy density of the electrochemical apparatus. In the final time period, charge and discharge operations performed on the electrochemical apparatus are stopped, or the user is prompted to stop charge and discharge operations performed on the electrochemical apparatus. This can prevent the electrochemical apparatus from causing squeezing damage to the housing caused by excessive irreversible swelling.

In a possible embodiment, a mass percentage of silicon in the negative electrode active material of the electrochemical apparatus is within the range of (0%, 60%].

When silicon is used as the second active material, as the silicon content of the negative electrode active material increases, the volumetric energy density of the electrochemical apparatus increases, but the cycling life of the electrochemical apparatus reduces. Setting the mass percentage of silicon in the negative electrode active material to be less than or equal to 60% can improve the volumetric energy density of the electrochemical apparatus without excessively reducing the cycling life of the electrochemical apparatus. Furthermore, controlling the electrochemical apparatus to operate at different discharge cut-off voltages and/or charge cut-off voltages in different time periods can ensure that the electrochemical apparatus has long cycling life while the volumetric energy density of the electrochemical apparatus is improved.

In a possible embodiment, a mass percentage of silicon in the negative electrode active material of the electrochemical apparatus is within a range of [10%, 20%].

When silicon is used as the second active material, and the mass percentage of silicon in the negative electrode active material is within the range of [10%, 20%], based on the high gram capacity characteristic of silicon, the volumetric energy density of the electrochemical apparatus can be improved. Since the mass percentage of silicon is less than or equal to 20%, the cycling performance of the electrochemical apparatus is not significantly affected. Controlling the electrochemical apparatus to operate at different discharge cut-off voltages and/or charge cut-off voltages in different time period can ensure that the electrochemical apparatus has long cycling life while the energy density of the electrochemical apparatus is fully utilized.

According to a second aspect of some embodiments of this application, a control method of electrochemical apparatus is provided, used to control a charge and discharge process of an electrochemical apparatus. A negative electrode active material of the electrochemical apparatus includes a first active material and a second active material, a gram capacity of the first active material is less than the second active material, a discharge operating voltage range of the first active material includes a first voltage range that is not greater than an upper limit of a discharge operating voltage of the second active material, and the control method of electrochemical apparatus includes: controlling the electrochemical apparatus to operate at a first discharge cut-off voltage and a first charge cut-off voltage during a first time period, where the first discharge cut-off voltage is within the first voltage range; and controlling the electrochemical apparatus to operate at a second discharge cut-off voltage and a second charge cut-off voltage during a second time period, where the second discharge cut-off voltage is within the first voltage range; where the first discharge cut-off voltage is less than the second discharge cut-off voltage, and/or the first charge cut-off voltage is greater than the second charge cut-off voltage.

The electrochemical apparatus is controlled to operate at the first discharge cut-off voltage and the first charge cut-off voltage during the first time period. The electrochemical apparatus is controlled to operate at the second discharge cut-off voltage and the second charge cut-off voltage during the second time period. The first discharge cut-off voltage and the second discharge cut-off voltage are both within the first voltage range. When the discharge cut-off voltage is within the first voltage range, much more of the first active material and much more of the second active material of the negative electrode active material participate in discharge. Adjusting the discharge cut-off voltage and the charge cut-off voltage of the electrochemical apparatus in a way that the first discharge cut-off voltage is less than the second discharge cut-off voltage, and/or the first charge cut-off voltage is greater than the second charge cut-off voltage. Adjusting the capacity offered by the second active material allows the capacity offered by the second active material to correspond to the state of health of the electrochemical apparatus, so that the service life of the electrochemical apparatus is extended. Thus, the electrochemical apparatus can have a longer service life while having improved volumetric energy density of the electrochemical apparatus.

In a possible embodiment, the discharge operating voltage range of the first active material includes a second voltage range greater than the upper limit of the discharge operating voltage of the second active material, and the control method of electrochemical apparatus further includes: controlling the electrochemical apparatus to operate at a third discharge cut-off voltage and a third charge cut-off voltage during a third time period; where the third discharge cut-off voltage is within the second voltage range, and/or the second charge cut-off voltage is greater than the third charge cut-off voltage.

In a possible embodiment, the control method of electrochemical apparatus further includes: controlling the electrochemical apparatus to perform at least one of the following operations during a fourth time period: (i) stopping charge and discharge; or (ii) issuing information for indicating stopping performing charge and discharge operations on the electrochemical apparatus.

In a possible embodiment, the first time period, the second time period, the third time period and the fourth time period are sequentially arranged in chronological order in a life cycle of the electrochemical apparatus.

In a possible embodiment, the control method of electrochemical apparatus further includes: determining, based on a value range of an SOH parameter of the electrochemical apparatus, a time period in which the electrochemical apparatus is located.

In a possible embodiment, the SOH parameter includes at least one of the following: (i) internal resistance of the electrochemical apparatus; (ii) reversible capacity of the electrochemical apparatus; (iii) thickness of the electrochemical apparatus; or (iiii) pressure or intensity of pressure between the electrochemical apparatus and a housing accommodating the electrochemical apparatus.

In a possible embodiment, a mass percentage of silicon in the negative electrode active material of the electrochemical apparatus is within the range of (0%, 60%].

In a possible embodiment, a mass percentage of silicon in the negative electrode active material of the electrochemical apparatus is within a range of [10%, 20%].

According to a third aspect of some embodiments of this application, an electrochemical apparatus management system is provided. The electrochemical apparatus management system is connected to an electrochemical apparatus, and the electrochemical apparatus management system is configured to execute the control method of electrochemical apparatus provided in the second aspect or any one of the possible embodiments of the second aspect.

According to a fourth aspect of some embodiments of this application, an electronic device is provided including the electrochemical apparatus provided in the first aspect or any one of the possible embodiments of the first aspect, or including the electrochemical apparatus management system provided in the third aspect.

According to a fifth aspect of some embodiments of this application, a computer-readable storage medium is provided. The computer-readable storage medium stores a computer program, and when the computer program is executed by a processor, the control method of electrochemical apparatus provided in the second aspect or any one of the possible embodiments of the second aspect.is implemented.

It can be learned from the above technical solutions that the electrochemical apparatus operates at the first discharge cut-off voltage and the first charge cut-off voltage during the first time period, the electrochemical apparatus operates at the second discharge cut-off voltage and the second charge cut-off voltage during the second time period, and the first discharge cut-off voltage and the second discharge cut-off voltage are both within the first voltage range. When the discharge cut-off voltage is within the first voltage range, much more of the first active material and much more of the second active material of the negative electrode active material participate in the discharge. Adjusting the discharge cut-off voltage and the charge cut-off voltage of the electrochemical apparatus in a way that the first discharge cut-off voltage is less than the second discharge cut-off voltage, and/or the first charge cut-off voltage is greater than the second charge cut-off voltage. Adjusting the capacity offered by the second active material allows the capacity offered by the second active material to correspond to the state of health of the electrochemical apparatus, so that the service life of the electrochemical apparatus is extended. Thus, the electrochemical apparatus can have a longer service life while having improved volumetric energy density of the electrochemical apparatus.

### BRIEF DESCRIPTION OF DRAWINGS

To describe the technical solutions in some embodiments of this application or in the prior art more clearly, the following briefly describes the accompanying drawings for describing some embodiments or the prior art. Apparently, the accompanying drawings in the following description show merely some embodiments of the embodiments of this application, and persons of ordinary skill in the art may still derive other drawings from these accompanying drawings without creative efforts.
FIG. 1 is a schematic diagram of detection of pressure applied by an electrochemical apparatus to a housing according to an embodiment of this application;
FIG. 2 is a schematic diagram of a change curve of swelling of an electrochemical apparatus and intensity of pressure to a housing versus the number of cycles according to an embodiment of this application; and
FIG. 3 is a flowchart of a control method of electrochemical apparatus according to one embodiment of this application.

### DETAILED DESCRIPTION

To make the technical solutions of some embodiments of this application clearer to persons skilled in the art, the following clearly describes in detail the technical solutions in some embodiments of this application with reference to the accompanying drawings in some embodiments of this application. Apparently, these embodiments described are some rather than all of the embodiments of this application. All other embodiments obtained by persons of ordinary skill in the art based on examples of some embodiments of this application fall within the protection scope of the embodiments of this application.

In the following description, the electrochemical apparatus and the control method thereof, the electronic device, and the storage medium in some embodiments of this application are specifically described first. Then, some related examples and comparative examples of the electrochemical apparatus and the control method thereof in some embodiments of this application are given to describe the significant advantages of the electrochemical apparatus and the control method thereof, the electronic device, and the storage medium in some embodiments of this application over the prior art.

The specific advantages of some embodiments of this application are described below with reference to the accompanying drawings.

It should be noted that in the content of some embodiments of this application, a lithium-ion battery is used as an example of an electrochemical apparatus to explain this application. However, the electrochemical apparatus of this application is not limited to the lithium-ion battery.

### Electrochemical apparatus

The electrochemical apparatus provides electrical energy for electronic products such as notebook computers, mobile phones, tablet computers, portable power sources, and drones. Lithium-ion batteries, sodium-ion batteries, and the like all use graphite negative electrode systems. As the requirements for the weight, volume, and endurance of electronic devices continue to increase, it is necessary to improve the volumetric energy density of the electrochemical apparatus. Materials with high gram capacities, such as silicon and phosphorus, have high reversible capacities. Therefore, applying materials such as silicon and phosphorus as negative electrode materials of electrochemical apparatuses can further improve volumetric energy density of electrochemical apparatuses. However, negative electrode materials with high gram capacities undergo significant swelling during cycling, which affects the service life of the electrochemical apparatus. Therefore, a technical solution is needed, which can improve the volumetric energy density of the electrochemical apparatus while ensuring that the electrochemical apparatus has a long service life.

An embodiment of this application provides an electrochemical apparatus, where the negative electrode active material of the electrochemical apparatus includes a first active material and a second active material. The gram capacity of the first active material is less than that of the second active material. The discharge operating voltage range of the first active material includes a first voltage range that is not greater than the upper limit of the discharge operating voltage of the second active material. The electrochemical apparatus operates at a first discharge cut-off voltage and a first charge cut-off voltage during the first time period. The electrochemical apparatus operates at a second discharge cut-off voltage and a second charge cut-off voltage during the second time period. Both the first discharge cut-off voltage and the second discharge cut-off voltage are within the first voltage range. The first discharge cut-off voltage is less than the second cut-off voltage, and/or the first charge cut-off voltage is greater than the second charge cut-off voltage.

Gram capacity refers to the ratio of the electric capacity that the active material inside the battery can release to the mass of the active material, and gram capacity is measured in milliampere-hours per gram (mA·h/g). The gram capacity of the first active material is less than that of the second active material. When the first active material and the second active material of the same mass are used as negative electrode active materials of the battery, electrical energy that can be released by the first active material is less than electrical energy that can be released by the second active material.

The first active material can be graphite, mesocarbon microbeads (Mesocarbon microbeads, MCMB), Li₄Ti₅O₁₂, or the like. The second active material can be SiOₓ (0<x<2), micron silicon, silicon nanowire, SiC, transition metal oxides (such as MnO, SnO₂, or CoO), phosphorus, or the like. The first active material and second active material can be freely combined. The negative electrode active material of the electrochemical apparatus can include multiple first active materials and/or multiple second active materials.

The second active material has a discharge operating voltage range. Within this discharge operating voltage range, both the first active material and the second active material offer a large capacity. Above the upper limit of the discharge operating voltage range of the second active material, the first active material offers the main part of the capacity, and the second active material offers a small amount of the capacity. For example, the first active material offers more than 80% of the capacity. Below the upper limit of the discharge operating voltage range of the second active material, the second active material offers the main part of the capacity, and the first active material offers a small amount of the capacity. For example, the second active material offers more than 80% of the capacity.

The discharge operating voltage range of the first active material includes a first voltage range that is not greater than the upper limit of the discharge operating voltage of the second active material. The upper limit of the discharge operating voltage of the second active material refers to the upper limit of the discharge operating voltage range of the second active material, for example, the discharge operating voltage range of the second active material is [2.3 V, 3.5 V], the upper limit of the discharge operating voltage of the second active material is 3.5 V, and the first voltage range is [2.3 V, 3.5 V]. The first voltage range is not greater than the upper limit of the discharge operating voltage of the second active material, which means any voltage value within the first voltage range is less than or equal to the upper limit of the discharge operating voltage of the second active material. Within the first voltage range, both the first active material and the second active material offer a large capacity. That is, when the discharge voltage of the electrochemical apparatus is within the first voltage range, much more of the first active material and much more of the second active material participate in the discharge process of the electrochemical apparatus. The first voltage range can be the same as the discharge operating voltage range of the second active material.

The first time period and the second time period can be the first cycling stage and the second cycling stage in the entire life cycle of the electrochemical apparatus. That is, the first time period and the second time period correspond to different charge and discharge cycles of the electrochemical apparatus. For example, the first time period ends between the 300th charge and discharge cycle and the 450th charge and discharge cycle of the electrochemical apparatus, and the second time period ends between the 451st charge and discharge cycle and the 600th charge and discharge cycle of the electrochemical apparatus. The first time period and the second time period can include one or more charge and discharge cycles of the electrochemical apparatus. The number of charge and discharge cycles included in the first time period and the second time period can be the same or different.

In this embodiment of this application, the electrochemical apparatus operates at the first discharge cut-off voltage and the first charge cut-off voltage during the first time period, the electrochemical apparatus operates at the second discharge cut-off voltage and the second charge cut-off voltage during the second time period, and the first discharge cut-off voltage and the second discharge cut-off voltage are both within the first voltage range. When the discharge cut-off voltage is within the first voltage range, much more of the first active material and much more of the second active material of the negative electrode active material participate in the discharge. Adjusting the discharge cut-off voltage and the charge cut-off voltage of the electrochemical apparatus in a way that the first discharge cut-off voltage is less than the second discharge cut-off voltage, and/or the first charge cut-off voltage is greater than the second charge cut-off voltage. Adjusting the capacity offered by the second active material allows the capacity offered by the second active material to correspond to the state of health of the electrochemical apparatus, so that the service life of the electrochemical apparatus is extended. Thus, the electrochemical apparatus can have a longer service life while having improved volumetric energy density of the electrochemical apparatus.

In a possible embodiment, the discharge operating voltage range of the first active material includes a second voltage range greater than the upper limit of the discharge operating voltage of the second active material. The electrochemical apparatus operates at a third discharge cut-off voltage and a third charge cut-off voltage during a third time period. The third discharge cut-off voltage is within the second voltage range, and/or the second charge cut-off voltage is greater than the third charge cut-off voltage.

The discharge operating voltage range of the first active material not only includes the first voltage range but also includes the second voltage range greater than the upper limit of the discharge operating voltage of the second active material. For example, if the discharge operating voltage range of the second active material is [2.3 V, 3.5 V], the upper limit of the discharge operating voltage of the second active material is 3.5 V, and the second voltage range is (3.5 V, 4.5 V]. The second voltage range is greater than the upper limit of the discharge operating voltage of the second active material, which means any voltage value within the second voltage range is greater than the upper limit of the discharge operating voltage of the second active material. Since the second voltage range is greater than the upper limit of the discharge operating voltage of the second active material, within the second voltage range, the first active material offers the main part of the capacity, and the second active material offers no capacity or only a small amount of the capacity. For example, the first active material offers more than 80% of the capacity, that is, when the discharge voltage of the electrochemical apparatus is within the second voltage range, much more of the first active material participates in the discharge process of the electrochemical apparatus, while a small amount of the second active material or none of the second active material participates in the discharge process of the electrochemical apparatus.

Since the first discharge cut-off voltage and the second discharge cut-off voltage are within the first voltage range, and the third discharge cut-off voltage is within the second voltage range, the first voltage range is not greater than the upper limit of the discharge operating voltage of the second active material, and the second voltage range is greater than the upper limit of the discharge operating voltage of the second active material, the third discharge cut-off voltage is greater than the first discharge cut-off voltage and the second discharge cut-off voltage.

In this embodiment of this application, the electrochemical apparatus operates at the third discharge cut-off voltage and the third charge cut-off voltage during the third time period, and the third discharge cut-off voltage is within the second voltage range. When the discharge cut-off voltage is within the second voltage range, much more of the first active material of the negative electrode active material participates in discharge, and none or only a small amount of the second active material participates in discharge. With the discharge cut-off voltage and the charge cut-off voltage of the electrochemical apparatus adjusted, the third discharge cut-off voltage is within the second voltage range, and/or the second charge cut-off voltage is greater than the third charge cut-off voltage. This can prevent the second active material from participating in the discharge process of the electrochemical apparatus, or allow only a small amount of the second active material to participate in the discharge process of the electrochemical apparatus. Thus, after significant swelling of the second active material, the second active material does not participate in the discharge process of the electrochemical apparatus, thereby suppressing further swelling of the electrochemical apparatus and extending the service life of the electrochemical apparatus.

In a possible embodiment, the electrochemical apparatus can perform at least one of the following operations during the fourth time period:
(i) stopping charge and discharge; or
(ii) issuing information for indicating stopping performing charge and discharge operations on the electrochemical apparatus.

In this embodiment of this application, as the number of cycles of the electrochemical apparatus increases, the endurance and safety performance of the electrochemical apparatus decrease, affecting the user experience. Since the second active material swells during cycling, as the number of cycles of the electrochemical apparatus increases, the volume of the electrochemical apparatus undergoes significant swelling. Expansion of the electrochemical apparatus increases the risk of damage to electronic devices. When the endurance and safety performance of the electrochemical apparatus decline to a certain extent, or the volume of the electrochemical apparatus swells to a certain extent, the electrochemical apparatus stops charge and discharge, or issues information to indicate stopping charge and discharge operations performed on the electrochemical apparatus, so as to prompt the user to replace the electrochemical apparatus. This can improve the user experience and enhance the safety of the electrochemical apparatus during use.

In a possible embodiment, the first time period, the second time period, the third time period and the fourth time period are sequentially arranged in chronological order in a life cycle of the electrochemical apparatus.

In the first time period and the second time period, both the first active material and the second active material participate in the discharge process of the electrochemical apparatus, fully utilizing the high gram capacity advantage of the second active material. As the number of cycles increases, the second active material gradually swells. By increasing the discharge cut-off voltage, the participation degree of the second active material in the discharge process can be reduced, thereby reducing the swelling speed of the electrochemical apparatus. In the third time period, the discharge process of the electrochemical apparatus is mainly participated by the first active material. Since the swelling of the second active material during cycling is greater than that of the first active material, after the electrochemical apparatus has undergone significant volume swelling, further increasing the discharge cut-off voltage of the electrochemical apparatus can prevent the second active material from participating in the discharge process of the electrochemical apparatus, thereby further reducing the swelling speed of the electrochemical apparatus and extending the service life of the electrochemical apparatus. In the fourth time period, the swelling degree of the electrochemical apparatus has already affected the safety of the electronic device. Stopping the charge and discharge operations performed on the electrochemical apparatus or indicating to stop the charge and discharge operations performed on the electrochemical apparatus can improve the user experience and ensure the safety of the electronic device containing the electrochemical apparatus.

Corresponding to increasing the discharge cut-off voltage of the electrochemical apparatus, lowering the charge cut-off voltage of the electrochemical apparatus can also reduce the participation degree of the second active material during cycling of the electrochemical apparatus, thereby reducing the swelling speed of the electrochemical apparatus and extending the service life of the electrochemical apparatus.

In this embodiment of this application, the first time period, the second time period, the third time period, and the fourth time period are sequentially arranged in chronological order in the life cycle of the electrochemical apparatus. The discharge cut-off voltages of the electrochemical apparatus are gradually increased in chronological order of the time periods, and the charge cut-off voltages of the electrochemical apparatus are gradually decreased in chronological order of the time periods. In the early stage of cycling of the electrochemical apparatus, the high gram capacity advantage of the second active material is fully utilized to improve the volumetric energy density of the electrochemical apparatus. In the later stage of cycling of the electrochemical apparatus, the capacity offered by the second active material is reduced, the swelling speed of the electrochemical apparatus is lowered, and the service life of the electrochemical apparatus is extended. Finally, charge and discharge operations performed on the electrochemical apparatus are stopped, or stopping charge and discharge operations performed on the electrochemical apparatus is indicated to improve the user experience with the electrochemical apparatus and ensure the safety of the electronic device containing the electrochemical apparatus.

In a possible embodiment, the second active material includes silicon, the first voltage range is not greater than 3.5 V, and the second voltage range is greater than 3.5 V.

In this embodiment of this application, when the second active material includes silicon, during the discharge process of the electrochemical apparatus, when the discharge voltage is above 3.5 V, the discharge process of the electrochemical apparatus is mainly participated by the first active material, with none or only a small amount of the second active material participating in the discharge process of the electrochemical apparatus. When the discharge voltage is below 3.5 V, both the first active material and the second active material participate in the discharge process of the electrochemical apparatus in large amounts. 3.5 V is used as a dividing point of the first voltage range and the second voltage range. In the first time period, the high gram capacity performance of the second active material can be fully utilized to improve the volumetric energy density of the electrochemical apparatus. In the second time period, the swelling speed of the electrochemical apparatus can be slowed down, extending the service life of the electrochemical apparatus.

In a possible embodiment, when the electrochemical apparatus operates in different time periods, a state of health (State Of Health, SOH) parameter of the electrochemical apparatus is within different value ranges.

In this embodiment of this application, when the electrochemical apparatus operates in different time periods, the SOH parameter of the electrochemical apparatus falls within different value ranges. The first time period, the second time period, the third time period, and the fourth time period can be determined based on the SOH parameter of the electrochemical apparatus. Since the SOH parameter is used to indicate the state of health of the electrochemical apparatus, the time periods in which the electrochemical apparatus is to operate are determined based on the SOH parameter, which means that the time periods in which the electrochemical apparatus is to operate are determined based on the state of health of the electrochemical apparatus. This allows the electrochemical apparatus to operate at different discharge cut-off voltages and/or charge cut-off voltages in different time periods. This ensures that the electrochemical apparatus has a long service life while fully utilizing the high gram capacity performance of the second active material to improve the volumetric capacity density of the electrochemical apparatus.

In a possible embodiment, the SOH parameter of the electrochemical apparatus includes at least one of the following:
(i) internal resistance of the electrochemical apparatus;
(ii) reversible capacity of the electrochemical apparatus;
(iii) thickness of the electrochemical apparatus; or
(iiii) pressure or intensity of pressure between the electrochemical apparatus and a housing accommodating the electrochemical apparatus.

In this embodiment of this application, during cycling of the electrochemical apparatus, the internal resistance, reversible capacity, thickness, and the pressure or intensity of pressure to the housing of the electrochemical apparatus can all reflect the state of health of the electrochemical apparatus. With one or more of the internal resistance, reversible capacity, thickness, and the pressure or intensity of pressure to the housing of the electrochemical apparatus used as the SOH parameter, the SOH parameter can accurately reflect the state of health of the electrochemical apparatus, and then the different time periods can be determined based on the SOH parameter. Adjusting the discharge cut-off voltage and charge cut-off voltage of the electrochemical apparatus in different time periods can fully utilize the high gram capacity performance of the second active material, and extends the service life of the electrochemical apparatus while improving the volumetric energy density of the electrochemical apparatus.

As the number of cycles of the electrochemical apparatus increases, the volume of the negative electrode active material will swell, thereby increasing the thickness of the electrochemical apparatus. Therefore, the thickness of the electrochemical apparatus can be used as an SOH parameter reflecting the state of health of the electrochemical apparatus. When the electrochemical apparatus is located inside the housing of an electronic device, for example, when the electrochemical apparatus is located inside a housing of a mobile phone, the swelling of the electrochemical apparatus will change the pressure and intensity of pressure between the electrochemical apparatus and the housing. Therefore, the pressure or intensity of pressure between the electrochemical apparatus and the housing that a user uses to accommodate the electrochemical apparatus can be used as an SOH parameter reflecting the state of health of the electrochemical apparatus.

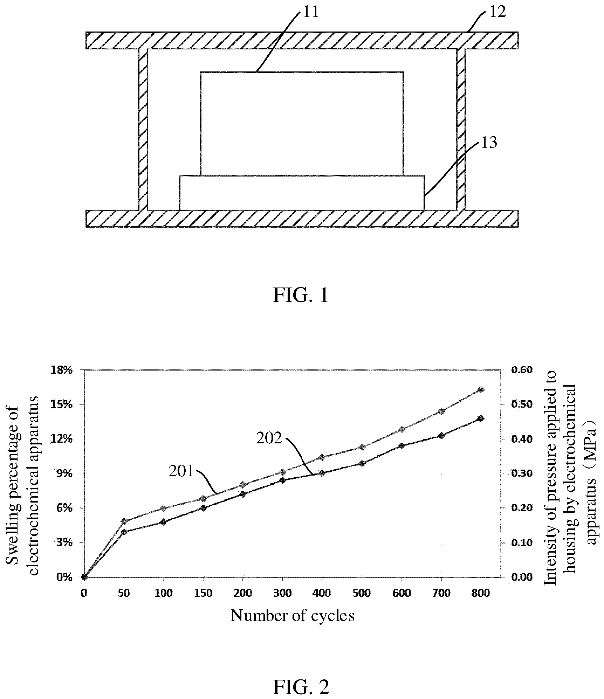

FIG. 1 is a schematic diagram of detection of pressure applied by an electrochemical apparatus to a housing according to an embodiment of this application. As shown in FIG. 1, the electrochemical apparatus 11 is arranged inside the housing 12, and a pressure sensor 13 is arranged between the electrochemical apparatus 11 and the lower side wall of the housing 12. As the number of cycles of the electrochemical apparatus 11 increases, the volume of the electrochemical apparatus 11 swells. When the electrochemical apparatus 11 swells to contact the upper side wall of the housing 12, with further swelling of the electrochemical apparatus 11, the pressure of the electrochemical apparatus 11 on the housing 12 increases. Thus, the swelling degree of the electrochemical apparatus 11 can be determined based on the pressure value detected by the pressure sensor 13. Furthermore, after the electrochemical apparatus management system obtains the pressure value detected by the pressure sensor 13, it divides this value by the contact area between the pressure sensor 13 and the electrochemical apparatus 11 to determine the intensity of pressure between the electrochemical apparatus 11 and the housing 12.

In a possible embodiment, when the SOH parameter is the intensity of pressure between the electrochemical apparatus and the housing, the first threshold, second threshold, and third threshold are set for the intensity of pressure between the electrochemical apparatus and the housing. The first threshold is less than the second threshold, and the second threshold is less than the third threshold. When the intensity of pressure between the electrochemical apparatus and the housing is less than a first threshold, the electrochemical apparatus operates in the first time period. When the intensity of pressure between the electrochemical apparatus and the housing is greater than or equal to the first threshold and less than a second threshold, the electrochemical apparatus operates in the second time period. When the intensity of pressure between the electrochemical apparatus and the housing is greater than or equal to the second threshold and less than a third threshold, the electrochemical apparatus operates in the third time period. When the intensity of pressure between the electrochemical apparatus and the housing is greater than or equal to a third intensity of pressure, the electrochemical apparatus operates in a fourth time period.

FIG. 2 shows a change curve of swelling of an electrochemical apparatus and intensity of pressure to a housing versus the number of cycles according to an embodiment of this application. As shown in FIG. 2, curve 201 is the change curve of the swelling percentage of the electrochemical apparatus with the number of cycles, and curve 202 is the change curve of the intensity of pressure applied to the housing by the electrochemical apparatus with the number of cycles. From curve 201, it can be seen that as the number of cycles of the electrochemical apparatus increases, the swelling percentage of the electrochemical apparatus gradually increases, which means the volume of the electrochemical apparatus gradually increases, and the health condition of the electrochemical apparatus continues to deteriorate. From curve 202, it can be seen that as the number of cycles of the electrochemical apparatus increases, the intensity of pressure applied to the housing by the electrochemical apparatus gradually increases. As seen from FIG. 1, the swelling percentage of the electrochemical apparatus is positively correlated with the intensity of pressure applied to the housing by the electrochemical apparatus, and the swelling degree of the electrochemical apparatus can reflect its state of health. Therefore, the life cycle of the electrochemical apparatus can be divided into multiple time periods based on the intensity of pressure applied to the housing by the electrochemical apparatus. The state of health of the electrochemical apparatus varies in different time periods. By adjusting the discharge cut-off voltage and the charge cut-off voltage of the electrochemical apparatus in different time periods, it ensures the service life of the electrochemical apparatus while improving the volumetric capacity density of the electrochemical apparatus.

In this embodiment of this application, as the number of cycles of the electrochemical apparatus increases, the state of health of the electrochemical apparatus continues to deteriorate, and the volume of the electrochemical apparatus continues to swell, causing the intensity of pressure between the electrochemical apparatus and the housing to continually increase. Therefore, the life cycle of the electrochemical apparatus can be divided into four time periods by sequentially increasing the first threshold, second threshold, and third threshold. In the first three time periods, the electrochemical apparatus operates at different discharge cut-off voltages and/or charge cut-off voltages. This reduces the swelling speed of the electrochemical apparatus and extends the service life of the electrochemical apparatus while improving the volumetric capacity density of the electrochemical apparatus. In the final time period, charge and discharge operations performed on the electrochemical apparatus are stopped, or stopping charge and discharge operations performed on the electrochemical apparatus is indicated, thereby improving the user experience with the electrochemical apparatus.

In a possible embodiment, the first threshold, second threshold, and third threshold set for the intensity of pressure between the electrochemical apparatus and the housing are: the first threshold is greater than or equal to 0.03 MPa, the second threshold is less than 0.5 MPa, and the third threshold is greater than or equal to 0.5 MPa.

Setting the first threshold to be greater than or equal to 0.03 MPa and less than 0.5 MPa allows the electrochemical apparatus to operate at a lower discharge cut-off voltage and/or a higher charge cut-off voltage when its cycling state is good, fully utilizing the energy density of the electrochemical apparatus. Setting the second threshold to be greater than the first threshold and less than 0.5 MPa, after the cycling state of the electrochemical apparatus has deteriorated to a certain extent, increases the discharge cut-off voltage and/or lowers the charge cut-off voltage of the electrochemical apparatus to avoid severe degradation of the cycling life of the electrochemical apparatus due to excessive irreversible swelling. Setting the third threshold to be greater than or equal to 0.5 MPa ensures that the electrochemical apparatus can charge and discharge when its cycling state is good, fully utilizing the energy density of the electrochemical apparatus. When the electrochemical apparatus undergoes significant swelling, charge and discharge operations on the electrochemical apparatus are stopped to avoid compression damage to the housing caused by excessive irreversible swelling of the electrochemical apparatus.

In this embodiment of this application, with the first threshold set to be greater than or equal to 0.03 MPa, the second threshold to be less than 0.5 MPa, and the third threshold to be greater than or equal to 0.5 MPa, the life cycle of the electrochemical apparatus is divided into four time periods by the first threshold, second threshold, and third threshold. In the first three time periods, the electrochemical apparatus operates at different discharge cut-off voltages and/or charge cut-off voltages. This slows down deterioration of the cycling state of the electrochemical apparatus and extends the service life of the electrochemical apparatus while fully utilizing the energy density of the electrochemical apparatus. In the final time period, charge and discharge operations performed on the electrochemical apparatus are stopped, or the user is prompted to stop charge and discharge operations performed on the electrochemical apparatus. This can prevent the electrochemical apparatus from causing squeezing damage to the housing caused by excessive irreversible swelling.

In a possible embodiment, a mass percentage of silicon in the negative electrode active material of the electrochemical apparatus is within the range of (0%, 60%]. For example, the mass percentage of silicon in the negative electrode active material is 1%, 10%, 20%, 30%, or 60%.

In this embodiment of this application, when silicon is used as the second active material, as the silicon content of the negative electrode active material increases, the volumetric energy density of the electrochemical apparatus increases, but the cycling life of the electrochemical apparatus reduces. Setting the mass percentage of silicon in the negative electrode active material to be less than or equal to 60% can improve the volumetric energy density of the electrochemical apparatus without excessively reducing the cycling life of the electrochemical apparatus. Furthermore, controlling the electrochemical apparatus to operate at different discharge cut-off voltages and/or charge cut-off voltages in different time periods can ensure that the electrochemical apparatus has long cycling life while the volumetric energy density of the electrochemical apparatus is improved.

In a possible embodiment, a mass percentage of silicon in the negative electrode active material of the electrochemical apparatus is within the range of [10%, 20%]. For example, the mass percentage of silicon in the negative electrode active material is 1%, 10%, or 20%.

In this embodiment of this application, when silicon is used as the second active material, and the mass percentage of silicon in the negative electrode active material is within the range of [10%, 20%], based on the high gram capacity characteristic of silicon, the volumetric energy density of the electrochemical apparatus can be improved. Since the mass percentage of silicon is less than or equal to 20%, the cycling performance of the electrochemical apparatus is not significantly affected. Controlling the electrochemical apparatus to operate at different discharge cut-off voltages and/or charge cut-off voltages in different time period can ensure that the electrochemical apparatus has long cycling life while the energy density of the electrochemical apparatus is fully utilized.

### Control method of electrochemical apparatus

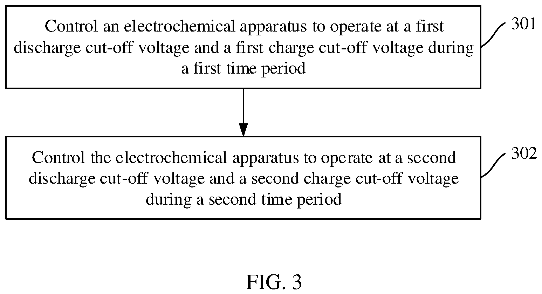

FIG. 3 is a flowchart of a control method of electrochemical apparatus according to an embodiment of this application, used to control a charge and discharge process of an electrochemical apparatus. A negative electrode active material of the electrochemical apparatus includes a first active material and a second active material, and a gram capacity of the first active material is less than the second active material, a discharge operating voltage range of the first active material includes a first voltage range that is not greater than an upper limit of a discharge operating voltage of the second active material. As shown in FIG. 3, the control method of electrochemical apparatus includes the following steps:

Step 301. Control the electrochemical apparatus to operate at a first discharge cut-off voltage and a first charge cut-off voltage during a first time period.

A life cycle of the electrochemical apparatus includes the first time period, the electrochemical apparatus is controlled to operate at the first discharge cut-off voltage and the first charge cut-off voltage during the first time period, where the first discharge cut-off voltage is within a first voltage range.

Step 302. Control the electrochemical apparatus to operate at a second discharge cut-off voltage and a second charge cut-off voltage during a second time period.

In the life cycle of the electrochemical apparatus, it includes a second time period different from the first time period, controlling the electrochemical apparatus to operate at a second discharge cut-off voltage and a second charge cut-off voltage during the second time period, where the second discharge cut-off voltage is within the first voltage range, and the first discharge cut-off voltage is less than the second discharge cut-off voltage and/or the first charge cut-off voltage is greater than the second charge cut-off voltage.

In this embodiment of this application, the electrochemical apparatus is controlled to operate at the first discharge cut-off voltage and the first charge cut-off voltage during the first time period. The electrochemical apparatus is controlled to operate at the second discharge cut-off voltage and the second charge cut-off voltage during the second time period. The first discharge cut-off voltage and the second discharge cut-off voltage are both within the first voltage range. When the discharge cut-off voltage is within the first voltage range, much more of the first active material and much more of the second active material of the negative electrode active material participate in discharge. Adjusting the discharge cut-off voltage and the charge cut-off voltage of the electrochemical apparatus in a way that the first discharge cut-off voltage is less than the second discharge cut-off voltage, and/or the first charge cut-off voltage is greater than the second charge cut-off voltage. Adjusting the capacity offered by the second active material allows the capacity offered by the second active material to correspond to the state of health of the electrochemical apparatus, so that the service life of the electrochemical apparatus is extended. Thus, the electrochemical apparatus can have a longer service life while having improved volumetric energy density of the electrochemical apparatus.

In a possible embodiment, the discharge operating voltage range of the first active material includes a second voltage range greater than the upper limit of the discharge operating voltage of the second active material, and in this case, the control method of electrochemical apparatus further includes:
controlling the electrochemical apparatus to operate at a third discharge cut-off voltage and a third charge cut-off voltage during a third time period; where the third discharge cut-off voltage is within the second voltage range, and/or the second charge cut-off voltage is greater than the third charge cut-off voltage.

In a possible embodiment, the control method of electrochemical apparatus further includes controlling the electrochemical apparatus to perform at least one of the following operations during a fourth time period:
(i) stopping charge and discharge; or
(ii) issuing information for indicating stopping performing charge and discharge operations on the electrochemical apparatus.

In a possible embodiment, when the life cycle of the electrochemical apparatus includes the first time period, the second time period, the third time period, and the fourth time period, the first time period, the second time period, the third time period, and the fourth time period are sequentially arranged in chronological order in the life cycle of the electrochemical apparatus.

In a possible embodiment, the control method of electrochemical apparatus further includes determining, based on a value range of a state of health parameter of the electrochemical apparatus, a time period in which the electrochemical apparatus is located.

In a possible embodiment, the state of health parameter includes at least one of the following: (i) internal resistance of the electrochemical apparatus; (ii) reversible capacity of the electrochemical apparatus; (iii) thickness of the electrochemical apparatus; or (iiii) pressure or intensity of pressure between the electrochemical apparatus and a housing accommodating the electrochemical apparatus.

In a possible embodiment, a mass percentage of silicon in the negative electrode active material of the electrochemical apparatus is within the range of (0%, 60%].

In a possible embodiment, a mass percentage of silicon in the negative electrode active material of the electrochemical apparatus is within a range of [10%, 20%].

It should be noted that since the details of the foregoing control method of electrochemical apparatus have been described in detail in the electrochemical apparatus embodiments of this application, for the specific process, reference may be made to the descriptions in the previous electrochemical apparatus embodiments, and details will not be repeated here.

### Electrochemical apparatus management system

An embodiment of this application provides an electrochemical apparatus management system, where the electrochemical apparatus management system is connected to the electrochemical apparatus, and the electrochemical apparatus management system is configured to execute the control method of electrochemical apparatus provided in the foregoing embodiments.

It should be noted that since the foregoing embodiments have already described the electrochemical apparatus and the control method of electrochemical apparatus in detail, for the process of the electrochemical apparatus management system controlling the operation of the electrochemical apparatus, reference may be made to the descriptions in the foregoing embodiments, and details will not be repeated here.

### Electronic device

An embodiment of this application provides an electronic device, including the electrochemical apparatus or the electrochemical apparatus management system in the foregoing embodiments. The electronic device can be a mobile phone, a drone, or the like. The negative electrode active material in the electrochemical apparatus of the electronic device includes a first active material and a second active material. The gram capacity of the first active material is less than that of the second active material. The presence of the second active material can improve the volumetric energy density of the electrochemical apparatus, giving the electronic device stronger endurance. Controlling the electrochemical apparatus in the electronic device to operate at different discharge cut-off voltages and/or charge cut-off voltages in different time periods can slow down the reduction of the cycling life of the electrochemical apparatus, thereby extending the service life of the electrochemical apparatus and improving the user's experience with the electronic device.

### Computer-readable storage medium

This application further provides a computer-readable storage medium, where the computer-readable storage medium stores a computer program, and when the computer program is executed by a processor, the control method of electrochemical apparatus in any one of the foregoing embodiments is implemented. Specifically, a system or an apparatus equipped with a storage medium can be provided, where the storage medium stores software program code that implements the functions of any one of the foregoing embodiments, and causes a computer (or CPU or MPU) of the system or apparatus to read and execute the program code stored in the storage medium.

In this case, the program code read from the storage medium can itself implement the functions of any one of the foregoing embodiments. Therefore, the program code and the storage medium storing the program code constitute a part of this application.

Examples of the storage medium for providing the program code include floppy disks, hard disks, magneto-optical disks, optical discs (such as CD-ROM, CD-R, CD-RW, DVD-ROM, DVD-RAM, DVD-RW, or DVD+RW), magnetic tapes, non-volatile memory cards, and ROM. Alternatively, the program code can be downloaded from a server computer over a communication network.

In addition, it should be understood that not only the program code read by the computer can be executed, but also a program code based instruction is used to make an operating system or the like operated on the computer complete some or all of the actual operations, so as to implement the function of any one of the foregoing embodiments.

Furthermore, it can be understood that the program code read from the storage medium can be written to a memory provided on an expansion board inserted in the computer or to a memory provided in an expansion module connected to the computer, and then, a program code based instruction makes a CPU or the like installed on the expansion board or the expansion module perform all or some of the actual operations to implement the function of any one of the foregoing embodiments.

### Computer program product

An embodiment of this application also provides a computer program product, where the computer program product is stored on a computer-readable medium and includes computer-executable instructions that, when executed, cause at least one processor to perform the control method of electrochemical apparatus in any of the foregoing embodiments. It should be understood that the various solutions in this embodiment have the corresponding technical effects of the method embodiments described above and will not be repeated here.

### Examples and comparative examples

Below, lithium-ion batteries serving as electrochemical apparatuses is used as an example to specifically describe some examples and comparative examples of some embodiments of this application. With these examples and comparative examples, the significant advantages of the electrochemical apparatus and the control method thereof, the electronic device, and the storage medium in some embodiments of this application over the prior art can be seen more clearly. It should be understood that the following examples and comparative examples are only used to better describe some embodiments of this application, and not to limit some embodiments of this application.

### <Comparative Example 1>

Preparation of positive electrode plate: A positive electrode active material lithium cobalt oxide, conductive carbon black (Super P), and polyvinylidene fluoride (PVDF) were mixed at a weight ratio of 97:1.4:1.6, with N-methylpyrrolidone (NMP) added as a solvent. The foregoing substances were stirred to uniformity to form a positive electrode slurry (with a solid content of 72wt%). The positive electrode slurry was uniformly applied on a positive electrode current collector aluminum foil, with a coating thickness of 80 µm, and dried at 85°C. After cold-pressing, cutting, and slitting, drying was performed under vacuum at 85°C for 4 hours to obtain a positive electrode plate.

Preparation of negative electrode plate: Artificial graphite, a binder polyacrylic acid, and sodium carboxymethyl cellulose (CMC) were dissolved in deionized water at a weight ratio of 97:1.5:1.5 to form a negative electrode slurry (with a solid content of 40wt%). A 10 µm thick copper foil was used as a negative electrode current collector. The negative electrode slurry was uniformly applied on the negative electrode current collector with a coating thickness of 50 µm, and dried at 85°C. Then, after cold pressing, cutting, and slitting, drying was performed in vacuum at 120°C for 12 hours to obtain a negative electrode plate.

Preparation of separator: A separator was 7 µm thick polyethylene (PE).

Preparation of electrolyte: In a dry argon atmosphere glove box, ethylene carbonate (EC), propylene carbonate (PC), and diethyl carbonate (DEC) were mixed at a mass ratio of EC:PC:DEC = 1:1:1. After they were dissolved and fully stirred, lithium salt LiPF₆ was added. There foregoing substances were mixed to uniformity to obtain an electrolyte, where a concentration of LiPF₆ was 1 mol/L.

Preparation of lithium-ion battery: The positive electrode plate, the separator, and the negative electrode plate were stacked in sequence, with the separator being sandwiched between the positive electrode and the negative electrode for separation, and wound to obtain an electrode assembly. The electrode assembly was put in an outer package aluminum-plastic film, and was dehydrated at 80°C. Then, the foregoing electrolyte was injected and packaging was performed, followed by processes such as formation, degassing, and trimming to obtain a lithium-ion battery.

Cycling conditions: A single cycling condition was used and maintained unchanged where a discharge cut-off voltage was 3.0 V, and a charge cut-off voltage was 4.45 V.

The following describes the test methods of parameters in various examples of this application.
(1) Test for charge cut-off voltage and discharge cut-off voltage: A battery voltage internal resistance tester or a multimeter might be used for the test.
(2) Test of intensity of pressure between electrochemical apparatus (lithium-ion battery) and housing: As shown in FIG. 1, the housing had a built-in pressure sensor. As the number of cycles of the electrochemical apparatus increased, irreversible swelling occurred. After the electrochemical apparatus came into contact with the housing and the pressure sensor, a certain pressure was formed. The intensity of pressure between the electrochemical apparatus and the housing was obtained by dividing the value of the pressure by the contact area between the sensor and the electrochemical apparatus. As shown in FIG. 2, there was a one-to-one correspondence between the intensity of pressure between the electrochemical apparatus and the housing and the swelling volume of the electrochemical apparatus during cycling.
(3) Test for number of cycles of electrochemical apparatus: The constant-current and constant-voltage charge and discharge test was performed on the battery cell according to the set charge and discharge cut-off voltages by using a cycling tester. For example, the charge and discharge cut-off voltages of a battery cell were 4.45 V and 3.0 V respectively. The cycling tester charged the battery cell to 4.45 V at constant 3C and a constant voltage at 25°C, and then discharged the battery cell to 3.0 V at 0.5C. This was one cycle. Repeated tests were performed to obtain different numbers of cycles of the battery cell. Test for number of cycles at 80% capacity: The battery cell after formation was charged at constant 3C and a constant voltage at 25°C, and then discharged at 0.5C. The capacity at this time was recorded as the initial capacity. The corresponding number of cycles when the battery capacity reduced to 80% of the initial capacity (or less than 80% of the initial capacity) for the first time was recorded as the number of cycles at 80% capacity.
(4) Energy density test: At 25°C, the lithium-ion battery prepared was fully charged at a constant rate of 0.2C and a constant voltage, and fully discharged at a rate of 0.2C. The discharge capacity at this time was recorded. The ratio of the discharge capacity of the lithium-ion battery to the volume of the lithium-ion battery was the volumetric energy density of the lithium-ion battery.

It should be noted that the tests for the voltage, internal resistance, and cycling life of the lithium-ion battery are e technologies well known to those skilled in the art, and no further description is provided herein. In addition, the test method is not limited to the methods described in this application, and other suitable test methods can also be used.

### <Comparative Examples 2 to 7>

Comparative Example 2 to Comparative Example 7 differed from Comparative Example 1 in that part of the artificial graphite in the negative electrode active material was replaced with a silicon-based material Si-C, where the mass percentage of element Si in the negative electrode active material in Comparative Example 2 was 1%, the mass percentage of element Si in the negative electrode active material in Comparative Example 3 was 10%, the mass percentage of element Si in the negative electrode active material in Comparative Example 4 was 20%, the mass percentage of element Si in the negative electrode active material in Comparative Example 5 was 30%, the mass percentage of element Si in the negative electrode active material in Comparative Example 6 was 60%, and the mass percentage of element Si in the negative electrode active material in Comparative Example 7 was 90%.

Table 1 below shows the energy density test results and test results of the number of cycles at 80% capacity of Comparative Example 1 to Comparative Example 7.

**Table 1**

| | Mass percentage of element Si in negative electrode active material | Increase percentage of energy density | Number of cycles at 80% capacity |
|---|---|---|---|
| Comparative Example 1 | 0% | Baseline group | 950 |
| Comparative Example 2 | 1% | 0.5% | 930 |
| Comparative Example 3 | 10% | 7% | 800 |
| Comparative Example 4 | 20% | 10% | 720 |
| Comparative Example 5 | 30% | 15% | 600 |
| Comparative Example 6 | 60% | 21% | 450 |
| Comparative Example 7 | 90% | 23% | 300 |

It can be seen from Table 1 above that the energy density of the electrochemical apparatus increases with the Si content of the negative electrode active material, but the cycling life of the electrochemical apparatus significantly decreases with the Si content of the negative electrode active material.

### <Comparative Examples 8 to 13>

Comparative Example 8 to Comparative Example 13 differed from Comparative Example 1 in that part of the artificial graphite in the negative electrode active material was replaced with a silicon-based material Si-C, so that the mass percentage of element Si in the negative electrode active material was 30%, the discharge cut-off voltage of Comparative Example 8 was 2.3 V, the discharge cut-off voltage of Comparative Example 9 was 2.5 V, the discharge cut-off voltage of Comparative Example 10 was 2.8 V, the discharge cut-off voltage of Comparative Example 11 was 3.2 V, the discharge cut-off voltage of Comparative Example 12 was 3.4 V, and the discharge cut-off voltage of Comparative Example 13 was 3.5 V. The charge cut-off voltages of Comparative Example 8 to Comparative Example 13 remained the same as those of Comparative Example 5, which was 4.45 V.

Table 2 below shows the energy density test results and test results of the number of cycles at 80% capacity of Comparative Example 5 and Comparative Examples 8 to 13.

**Table 2**

| | Discharge cut-off voltage (V) | Increase percentage of energy density | Number of cycles at 80% capacity |
|---|---|---|---|
| Comparative Example 8 | 2.3 | 4.0% | 400 |
| Comparative Example 9 | 2.5 | 3.7% | 520 |
| Comparative Example 10 | 2.8 | 3.0% | 550 |
| Comparative Example 5 | 3.0 | Baseline | 600 |
| Comparative Example 11 | 3.2 | -7% | 800 |
| Comparative Example 12 | 3.4 | -13% | 1200 |
| Comparative Example 13 | 3.5 | -15% | 1500 |

It can be seen from Table 2 above that the energy density of the electrochemical apparatus decreases with the discharge cut-off voltage, but the cycling life of the electrochemical apparatus significantly improves with the discharge cut-off voltage.

### <Comparative Examples 14 to 17>

Comparative Example 14 to Comparative Example 17 differed from Comparative Example 1 in that part of the artificial graphite in the negative electrode active material was replaced with a silicon-based material Si-C, so that the mass percentage of element Si in the negative electrode active material was 30%, the charge cut-off voltage of Comparative Example 14 was 4.2 V, the charge cut-off voltage of Comparative Example 15 was 4.3 V, the charge cut-off voltage of Comparative Example 16 was 4.6 V, and the charge cut-off voltage of Comparative Example 17 was 4.9 V. The discharge cut-off voltages of Comparative Example 14 to Comparative Example 17 remained the same as those of Comparative Example 5, which was 3.0 V.

Table 3 below shows the energy density test results and test results of the number of cycles at 80% capacity of Comparative Example 5 and Comparative Examples 14 to 17.

**Table 3**

| | Charge cut-off voltage (V) | Increase percentage of energy density | Number of cycles at 80% capacity |
|---|---|---|---|
| Comparative Example 14 | 4.2 | -4.5% | 750 |
| Comparative Example 15 | 4.3 | -3% | 700 |
| Comparative Example 5 | 4.45 | Baseline | 600 |
| Comparative Example 16 | 4.6 | 3.5% | 550 |
| Comparative Example 17 | 4.9 | 5.8% | 300 |

It can be seen from Table 3 above that the energy density of the electrochemical apparatus increases with the charge cut-off voltage, but the cycling life of the electrochemical apparatus deteriorates with the charge cut-off voltage.

### <Examples 1 to 5>

Example 1 to Example 5 differed from Comparative Example 5 in that part of the artificial graphite in the negative electrode active material was replaced with silicon-based material Si-C, so that the mass percentage of element Si in the negative electrode active material was 30%. The charge cut-off voltage was maintained at 4.45 V, and the initial discharge cut-off voltage (first discharge cut-off voltage) was 3.0 V. When the intensity of pressure between the electrochemical apparatus and the housing reached the corresponding first threshold, the discharge cut-off voltage was increased by 0.2 V, that is, the discharge cut-off voltage of the electrochemical apparatus was adjusted to the second discharge cut-off voltage (3.2 V). For Example 1, the corresponding first threshold was 0.03 MPa, for Example 2, the corresponding first threshold was 0.05 MPa, for Example 3, the corresponding first threshold was 0.08 MPa, for Example 4, the corresponding first threshold was 0.10 MPa, and for Example 5, the corresponding first threshold was 0.15 MPa.

The Table 4 below shows the test results of the number of cycles when the discharge cut-off voltage is increased and the test results of the number of cycles at 80% capacity in Comparative Example 5 and Examples 1 to 5.

**Table 4**

| | First threshold (MPa) | Number of cycles when the discharge cut-off voltage of the electrochemical apparatus is increased | Number of cycles at 80% capacity |
|---|---|---|---|
| Comparative Example 5 | 0 | / | 600 |
| Example 1 | 0.01 | 50 | 840 |
| Example 2 | 0.05 | 150 | 900 |
| Example 3 | 0.08 | 300 | 950 |
| Example 4 | 0.10 | 350 | 780 |
| Example 5 | 0.15 | 400 | 650 |

When the intensity of pressure between the electrochemical apparatus and the housing is less than the first threshold, it indicates that the irreversible swelling of the electrochemical apparatus is small, and the cycling performance of the electrochemical apparatus and the pressure to the housing are within a controllable range, allowing charge and discharge cycling to be conducted at the initial discharge cut-off voltage. It can be learned from Table 4 that if a too small first threshold is set (such as 0.01 MPa in Example 1), the discharge cut-off voltage of the electrochemical apparatus is increased after just 50 cycles, which is not conducive to fully utilizing the energy density of the electrochemical apparatus. If a too large first threshold is set (such as 0.15 MPa in Example 5), the discharge cut-off voltage of the electrochemical apparatus is raised only after 400 cycles, limiting the improvement in the cycling life and reduction in irreversible swelling of the electrochemical apparatus. Because, for lithium-ion batteries, it is generally required that the number of cycles at 80% capacity needs to be more than 800 cycles.

### <Examples 6 to 11>

Example 6 differed from Example 3 in that when the intensity of pressure between the electrochemical apparatus and the housing reached the third threshold (0.5 MPa), the charge and discharge cycling of the electrochemical apparatus was stopped, and the number of cycles of the electrochemical apparatus at this time was recorded.

Examples 7 to 11 differed from Example 3 in the addition of the second threshold. When the intensity of pressure between the electrochemical apparatus and the housing reached the first threshold (0.08 MPa) but did not reach the corresponding second threshold, the first discharge cut-off voltage (3.0 V) was raised to the second discharge cut-off voltage (3.2 V). When the intensity of pressure between the electrochemical apparatus and the housing reached the corresponding second threshold, the discharge cut-off voltage was further increased by 0.2 V, that is, the second discharge cut-off voltage (3.2 V) was raised to the third discharge cut-off voltage (3.4 V). When the intensity of pressure between the electrochemical apparatus and the housing reached the third threshold (0.5 MPa), the charge and discharge cycling of the electrochemical apparatus was stopped, and the number of cycles of the electrochemical apparatus at this time was recorded. For Example 7, the corresponding second threshold was 0.10 MPa, for Example 8, the corresponding second threshold was 0.15 MPa, for Example 9, the corresponding second threshold was 0.20 MPa, for Example 10, the corresponding second threshold was 0.25 MPa, and for Example 11, the corresponding second threshold was 0.30 MPa.

Table 5 below shows the test results of the number of cycles when the discharge cut-off voltage was raised to the second discharge cut-off voltage, the test results of the number of cycles when the discharge cut-off voltage was raised to the third discharge cut-off voltage, and the test results of the number of cycles when the electrochemical apparatus stopped charge and discharge in Example 3 and Examples 7 to 11.

**Table 5**

| | First threshold (MPa) | Number of cycles when the discharge cut-off voltage is increased to the second discharge cut-off voltage | Second threshold (MPa) | Number of cycles when the discharge cut-off voltage is increased to the third discharge cut-off voltage | Third threshold (MPa) | Number of cycles when the electrochemical apparatus stops charge and discharge |
|---|---|---|---|---|---|---|
| Example 3 | 0.08 | 300 | / | / | / | 950 |
| Example 6 | 0.08 | 300 | / | / | 0.5 | 950 |
| Example 7 | 0.08 | 300 | 0.10 | 400 | 0.5 | 1100 |
| Example 8 | 0.08 | 300 | 0.15 | 450 | 0.5 | 1200 |
| Example 9 | 0.08 | 300 | 0.20 | 550 | 0.5 | 1350 |
| Example 10 | 0.08 | 300 | 0.25 | 600 | 0.5 | 1400 |
| Example 11 | 0.08 | 300 | 0.30 | 700 | 0.5 | 1150 |

It can be learned from Table 5 that according to Example 3, the intensity of pressure between the electrochemical apparatus and the housing reaches the first threshold after the electrochemical apparatus goes through 300 cycles. As in Examples 7 to 11, with the second threshold set, when the intensity of pressure between the electrochemical apparatus and the housing reaches the first threshold but does not reach the second threshold, the discharge cut-off of the electrochemical apparatus is raised to the second discharge cut-off voltage (3.2 V). When the intensity of pressure between the electrochemical apparatus and the housing reaches the second threshold, the discharge cut-off voltage of the electrochemical apparatus is further raised to the third discharge cut-off voltage (3.4 V). This method of full charge and shallow discharge can enhance the cycling life of the electrochemical apparatus and reduce the irreversible volume swelling of the electrochemical apparatus, thereby reducing the pressure damage caused by the electrochemical apparatus to the housing. If a too small second threshold is set, charge and discharge operations performed on the electrochemical apparatus will be stopped or information for indicating stopping performing charge and discharge operations on the electrochemical apparatus will be issued when the cycling state of the electrochemical apparatus is still good, shortening the cycling life of the electrochemical apparatus. If a too large second threshold is set, the effects of improving the cycling life of the electrochemical apparatus and improving the safety performance of the electrochemical apparatus will be relatively limited.

### <Examples 12 to 16>

Example 12 to Example 16 differed from Comparative Example 5 in that part of the artificial graphite in the negative electrode active material was replaced with silicon-based material Si-C, so that the mass percentage of element Si in the negative electrode active material was 30%. The discharge cut-off voltage was maintained at 3.0 V, and the initial charge cut-off voltage (first charge cut-off voltage) was 4.45 V. When the intensity of pressure between the electrochemical apparatus and the housing reached the corresponding first threshold, the charge cut-off voltage was decreased by 0.05 V, that is, the charge cut-off voltage of the electrochemical apparatus was adjusted to the second charge cut-off voltage (4.4 V). For Example 12, the corresponding first threshold was 0.01 MPa, for Example 13, the corresponding first threshold was 0.05 MPa, for Example 14, the corresponding first threshold was 0.08 MPa, for Example 15, the corresponding first threshold was 0.10 MPa, and for Example 16, the corresponding first threshold was 0.15 MPa.

The Table 6 below shows the test results of the number of cycles when the charge cut-off voltage is decreased and the test results of the number of cycles at 80% capacity in Comparative Example 5 and Examples 12 to 16.

**Table 6**

| | First threshold (MPa) | Number of cycles when the charge cut-off voltage of the electrochemical apparatus is decreased | Number of cycles at 80% capacity |
|---|---|---|---|
| Comparative Example 5 | 0 | / | 600 |
| Example 12 | 0.01 | 50 | 800 |
| Example 13 | 0.05 | 150 | 850 |
| Example 14 | 0.08 | 300 | 910 |
| Example 15 | 0.10 | 350 | 750 |
| Example 16 | 0.15 | 400 | 680 |

When the intensity of pressure between the electrochemical apparatus and the housing is less than the first threshold, it indicates that the irreversible swelling of the electrochemical apparatus is small, and the cycling performance of the electrochemical apparatus and the pressure to the housing are within a controllable range, allowing charge and discharge cycling to be conducted at the initial charge cut-off voltage. It can be learned from Table 6 that if a too small first threshold is set (such as 0.01 MPa in Example 12), the charge cut-off voltage of the electrochemical apparatus is decreased after just 50 cycles, which is not conducive to fully utilizing the energy density of the electrochemical apparatus. If the first threshold is set too high (such as 0.15 MPa in Example 16), it will cause the charge cut-off voltage of the electrochemical apparatus to be reduced only after 400 cycles, limiting the improvement in the cycling life of the electrochemical apparatus and the control of irreversible swelling. For lithium-ion batteries, it is generally required that the number of cycles at 80% capacity needs to be more than 800 cycles.

### <Examples 17 to 22>

Example 17 differed from Example 14 in that when the intensity of pressure between the electrochemical apparatus and the housing reached the third threshold (0.5 MPa), the charge and discharge cycling of the electrochemical apparatus was stopped, and the number of cycles of the electrochemical apparatus at this time was recorded.

Examples 18 to 22 differed from Example 14 in the addition of the second threshold. When the intensity of pressure between the electrochemical apparatus and the housing reached the first threshold (0.08 MPa) but did not reach the corresponding second threshold, the first charge cut-off voltage (4.45 V) was decreased to the second charge cut-off voltage (4.4 V). When the intensity of pressure between the electrochemical apparatus and the housing reached the corresponding second threshold, the charge cut-off voltage was further decreased by 0.05 V, that is, the second charge cut-off voltage (4.5 V) was decreased to the third charge cut-off voltage (4.35 V). When the intensity of pressure between the electrochemical apparatus and the housing reached the third threshold (0.5 MPa), the charge and discharge cycling of the electrochemical apparatus was stopped, and the number of cycles of the electrochemical apparatus at this time was recorded. For Example 18, the corresponding second threshold was 0.10 MPa, for Example 19, the corresponding second threshold was 0.15 MPa, for Example 20, the corresponding second threshold was 0.20 MPa, for Example 21, the corresponding second threshold was 0.25 MPa, and for Example 22, the corresponding second threshold was 0.30 MPa.

Table 7 below shows the test results of the number of cycles when the charge cut-off voltage was decreased to the second charge cut-off voltage, the test results of the number of cycles when the charge cut-off voltage was decreased to the third discharge cut-off voltage, and the test results of the number of cycles when the electrochemical apparatus stopped charge and discharge in Example 14 and Examples 17 to 22.

**Table 7**

| | First threshold (MPa) | Number of cycles when the discharge cut-off voltage is increased to the second discharge cut-off voltage | Second threshold (MPa) | Number of cycles when the charge cut-off voltage is decreased to the third charge cut-off voltage | Third threshold (MPa) | Number of cycles when the electrochemical apparatus stops charge and discharge |
|---|---|---|---|---|---|---|
| Example 14 | 0.08 | 300 | / | / | / | 910 |
| Example 17 | 0.08 | 300 | / | / | 0.5 | 850 |
| Example 18 | 0.08 | 300 | 0.10 | 350 | 0.5 | 1000 |
| Example 19 | 0.08 | 300 | 0.15 | 400 | 0.5 | 1100 |
| Example 20 | 0.08 | 300 | 0.20 | 500 | 0.5 | 1250 |
| Example 21 | 0.08 | 300 | 0.25 | 550 | 0.5 | 1300 |
| Example 22 | 0.08 | 300 | 0.30 | 650 | 0.5 | 1050 |

It can be learned from Table 7 that according to Example 14, the intensity of pressure between the electrochemical apparatus and the housing reaches the first threshold after the electrochemical apparatus goes through 300 cycles. As in Examples 18 to 22, with the second threshold set, when the intensity of pressure between the electrochemical apparatus and the housing reaches the first threshold but does not reach the second threshold, the charge cut-off voltage of the electrochemical apparatus is decreased to the second charge cut-off voltage (4.4 V). When the intensity of pressure between the electrochemical apparatus and the housing reaches the second threshold, the charge cut-off voltage of the electrochemical apparatus is further decreased to the third charge cut-off voltage (4.35 V). This method of shallow charge can enhance the cycling life of the electrochemical apparatus and reduce the irreversible volume swelling of the electrochemical apparatus, thereby reducing the pressure damage caused by the electrochemical apparatus to the housing.

### <Examples 23 to 26>

Examples 23 to 26 differed from Example 21 in that the first discharge cut-off voltage was 3.0 V, the first charge cut-off voltage was 4.45 V, the first threshold was 0.08 MPa, the second threshold was 0.25 MPa, and the third threshold was 0.5 MPa. When the intensity of pressure between the electrochemical apparatus and the housing reached the first threshold but did not reach the second threshold, the first discharge cut-off voltage (3.0 V) was raised by a corresponding first preset value to reach the second discharge cut-off voltage, and the first charge cut-off voltage (4.45 V) was lowered by a corresponding second preset value to reach the second charge cut-off voltage. When the intensity of pressure between the electrochemical apparatus and the housing reached the second threshold, the second discharge cut-off voltage was raised by a corresponding first preset value to reach the third discharge cut-off voltage, and the second charge cut-off voltage was lowered by a corresponding second preset value to reach the third discharge cut-off voltage. For Example 21, the corresponding first preset value is 0, and the corresponding second preset value is 0.05 V. For Example 23, the corresponding first preset value is 0.1 V, and the corresponding second preset value is 0.05 V. For Example 24, the corresponding first preset value is 0.2 V, and the corresponding second preset value is 0. For Example 25, the corresponding first preset value is 0.2 V, and the corresponding second preset value is 0.025 V. For Example 26, the corresponding first preset value is 0.2 V, and the corresponding second preset value is 0.05 V

Table 8 below shows the test results of the number of cycles when the electrochemical apparatus stops charge and discharge in Example 21 and Examples 23 to 26.

**Table 8**

| | First preset value (V) | Second preset value (V) | Number of cycles when the electrochemical apparatus stops charge and discharge |
|---|---|---|---|
| Example 21 | 0 | 0.05 | 1300 |
| Example 23 | 0.1 | 0.05 | 1450 |
| Example 24 | 0.2 | 0 | 1400 |
| Example 25 | 0.2 | 0.025 | 1600 |
| Example 26 | 0.2 | 0.05 | 1050 |

After the intensity of pressure between the electrochemical apparatus and the housing reaches the first threshold or the second threshold, it is necessary to increase the discharge cut-off voltage and decrease the charge cut-off voltage. The ratio of the first preset value to the second preset value needs to be balanced, and generally, the first preset value needs to be set to be greater than the second preset value.

It should be understood that the embodiments in this specification are described in a progressive manner. For a part that is the same or similar between different embodiments, reference may be made between the embodiments. Each embodiment focuses on differences from other embodiments. In particular, the method embodiment is basically similar to the methods described in the apparatus and system embodiments, and therefore its description is relatively simple. For the relevant parts, reference can be made to the partial description in other embodiments.

It should be understood that the foregoing describes specific embodiments of this specification. Other embodiments fall within the scope of the claims. In some cases, actions or steps described in the claims may be performed in an order different from that in the embodiments, and may still implement desired results. In addition, the processes described in the accompanying drawings are not necessarily performed in an illustrated particular order or sequentially to implement the desired results. In some embodiments, multi-task processing and parallel processing are also acceptable or may be advantageous.

It should be understood that the use of singular form in description or the depiction of only one element in the drawings does not imply that the number of that element is limited to one. Furthermore, elements described or shown as separate modules or elements herein may be combined into a single module or element, and a single module or element described or shown herein may be split into multiple modules or elements.

It should also be understood that the terminology and expressions used herein are for descriptive purposes only, and one or more embodiments of this specification should not be limited to these terminologies and expressions. The use of these terms and expressions does not imply the exclusion of any equivalent features of any illustration and description (or parts thereof). Various possible modifications should be considered to fall within the scope of the claims. Other modifications, changes, and substitutions may also be possible. Accordingly, the claims should be considered to cover all such equivalents.

## Claims

1. An electrochemical apparatus, wherein
a negative electrode active material of the electrochemical apparatus comprises a first active material and a second active material; wherein
a gram capacity of the first active material is less than a gram capacity of the second active material;
a discharge operating voltage range of the first active material comprises a first voltage range, the first voltage range is not greater than an upper limit of a discharge operating voltage of the second active material;
the electrochemical apparatus operates at a first discharge cut-off voltage and a first charge cut-off voltage during a first time period;
the electrochemical apparatus operates at a second discharge cut-off voltage and a second charge cut-off voltage during a second time period; and
the first discharge cut-off voltage and the second discharge cut-off voltage are both within the first voltage range; wherein
the first discharge cut-off voltage is less than the second discharge cut-off voltage, and/or the first charge cut-off voltage is greater than the second charge cut-off voltage.

2. The electrochemical apparatus according to claim 1, wherein
the discharge operating voltage range of the first active material further comprises a second voltage range greater than the upper limit of the discharge operating voltage of the second active material; and
the electrochemical apparatus operates at a third discharge cut-off voltage and a third charge cut-off voltage during a third time period; wherein
the third discharge cut-off voltage is within the second voltage range, and/or the second charge cut-off voltage is greater than the third charge cut-off voltage.

3. The electrochemical apparatus according to claim 2, wherein the second active material comprises silicon, the first voltage range is not greater than 3.5 V, and the second voltage range is greater than 3.5 V.

4. The electrochemical apparatus according to claim 2, wherein the electrochemical apparatus performs at least one of the following operations during a fourth time period:
(i) stopping charge and discharge; or
(ii) issuing information for indicating stopping performing charge and discharge operations on the electrochemical apparatus.

5. The electrochemical apparatus according to claim 4, wherein the first time period, the second time period, the third time period, and the fourth time period are sequentially arranged in chronological order.

6. The electrochemical apparatus according to claim 5, wherein when the electrochemical apparatus operates in different time periods, a state of health parameter of the electrochemical apparatus is within different value ranges.

7. The electrochemical apparatus according to claim 6, wherein the state of health parameter comprises at least one of the following:
(i) an internal resistance of the electrochemical apparatus;
(ii) a reversible capacity of the electrochemical apparatus;
(iii) a thickness of the electrochemical apparatus; or
(iiii) a pressure or an intensity of pressure between the electrochemical apparatus and a housing accommodating the electrochemical apparatus.

8. The electrochemical apparatus according to claim 7, wherein the state of health parameter is the intensity of pressure between the electrochemical apparatus and the housing;
when the intensity of pressure between the electrochemical apparatus and the housing is less than a first threshold, the electrochemical apparatus operates in the first time period;
when the intensity of pressure between the electrochemical apparatus and the housing is greater than or equal to the first threshold and less than a second threshold, the electrochemical apparatus operates in the second time period;
when the intensity of pressure between the electrochemical apparatus and the housing is greater than or equal to the second threshold and less than a third threshold, the electrochemical apparatus operates in the third time period; and
when the intensity of pressure between the electrochemical apparatus and the housing is greater than or equal to the third threshold, the electrochemical apparatus operates in the fourth time period.

9. The electrochemical apparatus according to claim 8, wherein the first threshold is greater than or equal to 0.03 MPa, the second threshold is less than 0.5 MPa, the third threshold is greater than or equal to 0.5 MPa, and the second threshold is greater than the first threshold.

10. The electrochemical apparatus according to any one of claims 1 to 9, wherein the second active material comprises silicon, and a mass percentage of silicon in the negative electrode active material is within a range of (0%, 60%].

11. The electrochemical apparatus according to claim 10, wherein the mass percentage of silicon in the negative electrode active material is within a range of [10%, 30%].

12. A control method of electrochemical apparatus, used to control a charge and discharge process of a electrochemical apparatus, wherein a negative electrode active material of the electrochemical apparatus comprises a first active material and a second active material, a gram capacity of the first active material is less than the second active material, a discharge operating voltage range of the first active material comprises a first voltage range that is not greater than an upper limit of a discharge operating voltage of the second active material, and the control method of electrochemical apparatus comprises:
controlling the electrochemical apparatus to operate at a first discharge cut-off voltage and a first charge cut-off voltage during a first time period, wherein the first discharge cut-off voltage is within the first voltage range; and
controlling the electrochemical apparatus to operate at a second discharge cut-off voltage and a second charge cut-off voltage during a second time period, wherein the second discharge cut-off voltage is within the first voltage range; wherein
the first discharge cut-off voltage is less than the second discharge cut-off voltage, and/or the first charge cut-off voltage is greater than the second charge cut-off voltage.

13. The control method of electrochemical apparatus according to claim 12, wherein the discharge operating voltage range of the first active material comprises a second voltage range greater than the upper limit of the discharge operating voltage of the second active material, and the control method of electrochemical apparatus further comprises:
controlling the electrochemical apparatus to operate at a third discharge cut-off voltage and a third charge cut-off voltage during a third time period; wherein
the third discharge cut-off voltage is within the second voltage range, and/or the second charge cut-off voltage is greater than the third charge cut-off voltage.

14. The control method of electrochemical apparatus according to claim 13, wherein the control method of electrochemical apparatus further comprises:
controlling the electrochemical apparatus to perform at least one of the following operations during a fourth time period:
(i) stopping charge and discharge; or
(ii) issuing information for indicating stopping performing charge and discharge operations on the electrochemical apparatus.

15. The control method of electrochemical apparatus according to claim 14, wherein the first time period, the second time period, the third time period and the fourth time period are sequentially arranged in chronological order in a life cycle of the electrochemical apparatus.

16. The control method of electrochemical apparatus according to claim 15, wherein the control method of electrochemical apparatus further comprises:
determining, based on a value range of a state of health parameter of the electrochemical apparatus, a time period in which the electrochemical apparatus is located.

17. The control method of electrochemical apparatus according to claim 16, wherein the state of health parameter comprises at least one of the following:
(i) an internal resistance of the electrochemical apparatus;
(ii) a reversible capacity of the electrochemical apparatus;
(iii) a thickness of the electrochemical apparatus; or
(iiii) a pressure or an intensity of pressure between the electrochemical apparatus and a housing accommodating the electrochemical apparatus.

18. The control method of electrochemical apparatus according to any one of claims 12 to 17, wherein the second active material comprises silicon, and a mass percentage of silicon in the negative electrode active material is within a range of (0%, 60%].

19. The control method of electrochemical apparatus according to claim 18, wherein the mass percentage of silicon in the negative electrode active material is within a range of [10%, 30%].

20. An electrochemical apparatus management system, wherein the electrochemical apparatus management system is connected to an electrochemical apparatus, and the electrochemical apparatus management system is configured to execute the control method of electrochemical apparatus according to any one of claims 12 to 19.

21. An electronic device, comprising the electrochemical apparatus according to any one of claims 1 to 11 or the electrochemical apparatus management system according to claim 20.

22. A computer-readable storage medium, wherein the computer-readable storage medium stores a computer program, and when the computer program is executed by a processor, the control method of electrochemical apparatus according to any one of claims 12 to 19 is implemented.
